# EUROPEAN PATENT APPLICATION

(11) **EP 4 454 850 A1**
(43) Date of publication of application: **30.10.2024**
(21) Application number: 24170990.6
(22) Date of filing: 18.04.2024
(51) Int. Cl.: B29C 31/00, B29C 44/06, B29C 44/08, B29C 44/42, B29C 44/58, B29C 33/36, B29C 45/04, B29C 45/16, B29D 35/00, B29L 31/50

(54) **MOLDING DEVICE, INJECTION MOLDING SYSTEM AND MOLDING METHOD**

(30) Priority: 25.04.2023 US 202363498265 P; 28.09.2023 US 202363585970 P; 21.02.2024 US 202418582693
(71) Applicant: King Steel Machinery Co., Ltd., Taichung City 407 (TW)
(72) Inventor: CHEN, Ching-Hao, 407 Taichung City (TW); LEE, Yi-Chung, 411 Taichung City (TW)
(74) Representative: Michalski Hüttermann & Partner Patentanwälte mbB

(57) **Abstract**

A molding device includes a first mold, a second mold, a mold cavity, and a position control mechanism attached to the first mold and the second mold, wherein the first mold and the second mold are movable by the position control mechanism individually. A molding method includes providing a molding device having a first mold, a second mold and a third mold; engaging the first mold with the second mold to form a first mold cavity; injecting a first material into the first mold cavity to form a first layer; disengaging the first mold from the second mold by a position control mechanism; engaging the third mold with the second mold to form a second mold cavity; injecting a second material into the second mold cavity to form an article; and disengaging the third mold from the second mold by the position control mechanism.

## Description

### CROSS-REFERENCE TO RELATED APPLICATION

The present application claims priority to U.S. Patent Application No. 18/582,693, filed on February 21, 2024, which claims priority of U.S. Provisional Patent Application No. 63/498,265, filed on April 25, 2023 and U.S. Provisional Patent Application No. 63/585,970, filed on September 28, 2023, all of above are incorporated by reference herein in their entirety.

### TECHNICAL FIELD

The present invention is related to a molding device, an injection molding system and a molding method, and, in particular, to a molding device, an injection molding system and a molding method for forming an article including more than one portion having different physical or functional properties.

### BACKGROUND

Foamed polymeric material has many advantages, such as high strength, low weight, impact resistance, thermal insulation, and others. Foamed articles can be made by injection molding or extrusion molding. For example, after the polymeric material is melted and mixed with a blowing agent to form a mixture, a force or pressure is applied to the mixture to inject or extrude the mixture into a cavity of a mold, and the mixture is foamed and cooled in the cavity to form the foamed article.

However, it is necessary to improve the properties of the foamed article made by the injection molding system, such as causing different portions of the foamed article to have different properties. Therefore, there is a need for improvements to structures of the injection molding system and the method for making foamed articles.

### BRIEF SUMMARY OF THE INVENTION

One purpose of the present invention is to provide a molding device, an injection molding system and an injection molding method.

According to one embodiment of the present disclosure, a molding device is provided. The molding device includes a first mold, a second mold, a first mold cavity defined by the first mold and the second mold when the first mold is disposed opposite to the second mold, and a position control mechanism attached to the first mold and the second mold. The first mold and the second mold are movable by the position control mechanism individually.

According to one embodiment of the present disclosure, an injection molding system is provided. The injection molding system includes a carrier having a plurality of molding stations; a molding device disposed in one of the molding stations, and including a position control mechanism, a first mold, a second mold and a third mold held by the position control mechanism; and a first injection station disposed adjacent to the carrier and configured to inject a first polymeric material into a first mold cavity of the molding device defined by the first mold and the second mold. The position control mechanism is configured to individually move the first mold, the second mold and the third mold.

According to one embodiment of the present disclosure, a molding method is provided. The molding method includes: providing a molding device having a first mold, a second mold and a third mold; engaging the first mold with the second mold to form a first mold cavity defined by the first mold and the second mold; and injecting a first polymeric material into the first mold cavity to form a first layer from the first polymeric material in the first mold cavity. The molding method further includes disengaging the first mold from the second mold by a position control mechanism; engaging the third mold with the second mold to form a second mold cavity defined by the second mold and the third mold; injecting a second polymeric material into the second mold cavity and over the first layer to form an article including the first layer and a second layer from the second polymeric material; and disengaging the third mold from the second mold by the position control mechanism.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is a schematic perspective view of a molding device in accordance with some embodiments of the present disclosure.
FIG. 2 is a schematic perspective view of a molding device in accordance with some embodiments of the present disclosure.
FIG. 3 is a schematic top view of a portion of a molding device in accordance with some embodiments of the present disclosure.
FIG. 4 is a schematic cross-sectional view of a portion of a molding device in accordance with some embodiments of the present disclosure.
FIG. 5 is a schematic perspective view of a molding device in accordance with some embodiments of the present disclosure.
FIG. 6 is a schematic perspective view of a molding device in accordance with some embodiments of the present disclosure.
FIG. 7 is a schematic perspective view of a molding device in accordance with some embodiments of the present disclosure.
FIG. 8 is a schematic perspective view of a molding device in accordance with some embodiments of the present disclosure.
FIG. 9 is a schematic cross-sectional view of a portion of a molding device in accordance with some embodiments of the present disclosure.
FIG. 10 is a schematic cross-sectional view of a portion of a molding device in accordance with some embodiments of the present disclosure.
FIG. 11 is a schematic top view of an injection molding system in accordance with some embodiments of the present disclosure.
FIG. 12 is a schematic perspective view of an injection molding system in accordance with some embodiments of the present disclosure.
FIG. 13 is a flowchart showing a molding method in accordance with some embodiments of the present disclosure.
FIG. 14 is a flowchart showing a molding method in accordance with some embodiments of the present disclosure.
FIGS. 15-16, 18-20, 23 and 24 are schematic perspective views of a portion of an injection molding system used in a method of manufacturing an article in accordance with some embodiments of the present disclosure.
FIGS. 17, 21, 22 are schematic cross-sectional views illustrating exemplary operations in a molding method according to one embodiment of the present disclosure.
FIG. 25 is schematic perspective view of an article manufactured by a method of manufacturing an article in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

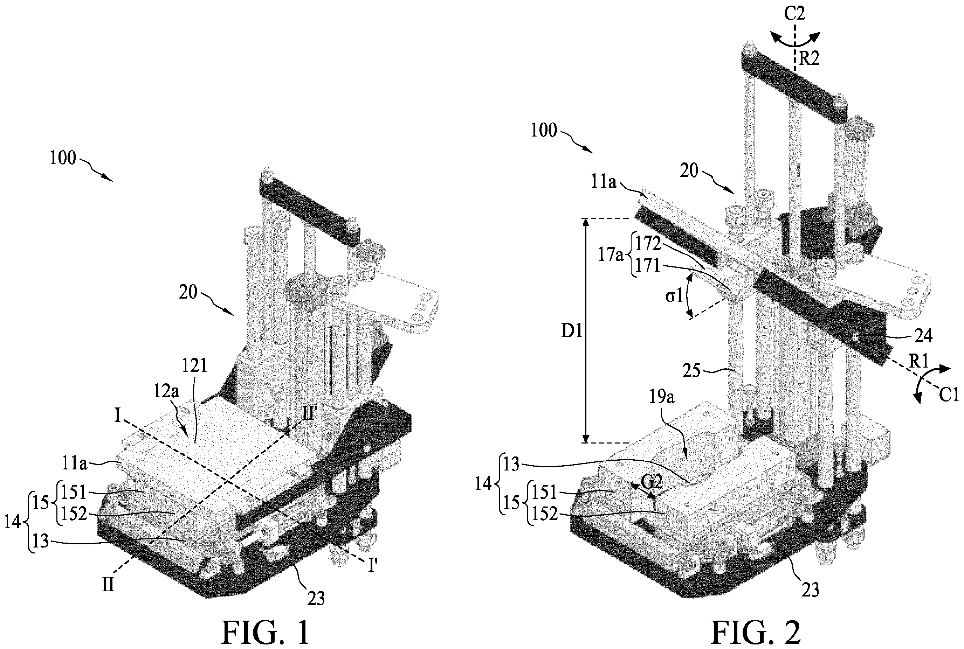

FIG. 1 is a schematic perspective view of a molding device 100 in accordance with some embodiments of the present disclosure in a closed configuration, and FIG. 2 is a schematic perspective view of the molding device 100 in an opened configuration.

In some embodiments, the molding device 100 includes a first mold 11a and a second mold 14, a first mold cavity 19a and a position control mechanism 20. The first mold 11a serves as an upper mold, and the second mold 14 includes a lower mold 13 and an outer middle mold 15 disposed between the first mold 11a and the lower mold 13. A first mold cavity 19a for forming an article (not shown) is defined by the first mold 11a and the second mold 14 when the first mold 11a is disposed opposite to the second mold 14. The position control mechanism 20 attached to the first mold 11a and the second mold 14, and the first mold 11a and the second mold 14 are movable by the position control mechanism individually.

In some embodiments, the upper mold 11, the lower mold 13 and an outer middle mold 15 define the first mold cavity 19a. In some embodiments, the first mold 11a corresponds to the second mold 14 in some configurations such as dimension, shape or the like. The first mold 11a can be placed on and engaged with the outer middle mold 15. In some embodiments, the provision of the molding device 100 includes conveying the outer middle mold 15 towards the lower mold 13, and subsequently disposing the first mold 11a over the outer middle mold 15. In some embodiments, the first mold 11a is aligned with the lower mold 13. In some embodiments as shown in FIG. 2, the molding device 100 is in an open configuration. In some embodiments, the first mold 11a is disposed over, moveable relative to and engageable with the outer middle mold 15, and the outer middle mold 15 is disposed over, moveable relative to and engageable with the lower mold 13.

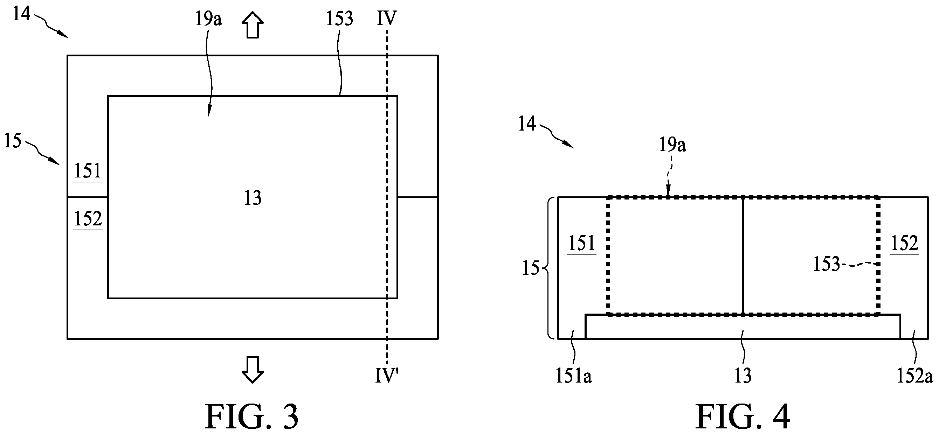

FIG. 3 shows a schematic top view of a portion of the molding device 100 in a closed configuration. FIG. 4 is a cross-sectional view of the portion of the molding device 100 along line IV-IV' in FIG. 3. In some embodiments, the outer middle mold 15 of the second mold 14 includes a first portion 151 and a second portion 152 adjacent to and engageable with each other. In some embodiments, the first portion 151 and the second portion 152 are movably and detachably from each other. The first portion 151 and the second portion 152 are movable toward or away from each other. In some embodiments, an extending part 151a of the first portion 151 and an extending part 152a of the second portion 152 surround the lower mold 13. The lower mold 13 is stationary relative to the first portion 151 and the second portion 152. In some embodiments, the first portion 151 and the second portion 152 are attached to and engaged with each other to seal the first mold cavity 19a when the molding device 100 is in the closed configuration. In some embodiments, the first portion 151 and the second portion 152 are separated from each other when the molding device 100 is in the opened configuration (as shown in FIG. 2), and an article (not shown) formed in the first mold cavity 19a may be easily removed from the first mold cavity 19a. In some embodiments, the first portion 151 are sided away from the second portion 152 to extend the first mold cavity 19a. In some embodiments, the first mold cavity 19a is extended when the molding device 100 is in the opened configuration.

In some embodiments, referring back to FIGS. 1 and 2, the first mold 11a is rotatable about a first axis C1 by a hinge 24 of the position control mechanism 20. In some embodiments, the first mold 11a may be tilted by rotating about the first axis C1. In some embodiments, when the first mold 11a is tilted (as shown in FIG. 2), an first angle σ1 is present between a bottom surface of the first mold 11a and a top surface 131 of the lower mold 13. In some embodiments, the first angle σ1 ranges between 0 and 90 degree. In some embodiments, the first angle σ1 ranges between 10 and 80 degree. In some embodiments, the first mold 11a is rotatable about the first axis C1 and along a first direction R1. The first direction R1 is clockwise or anti-clockwise.

In some embodiments, the second mold 14 is linearly movable along a rail 25 of the position control mechanism 20. In some embodiments, the outer middle mold 15 and the lower mold 13 are disposed on a platform 23 and linearly movable along the rail 25 of the position control mechanism 20, and the position control mechanism 20 therefore may control a first distance D1 between the first mold 11a and the second mold 14. In some embodiments, when the molding device 100 is in the closed configuration, the platform 23 may press the second mold 14 toward the first mold 11a, such as press the outer middle mold 15 and the lower mold 13 toward the first mold 11a.

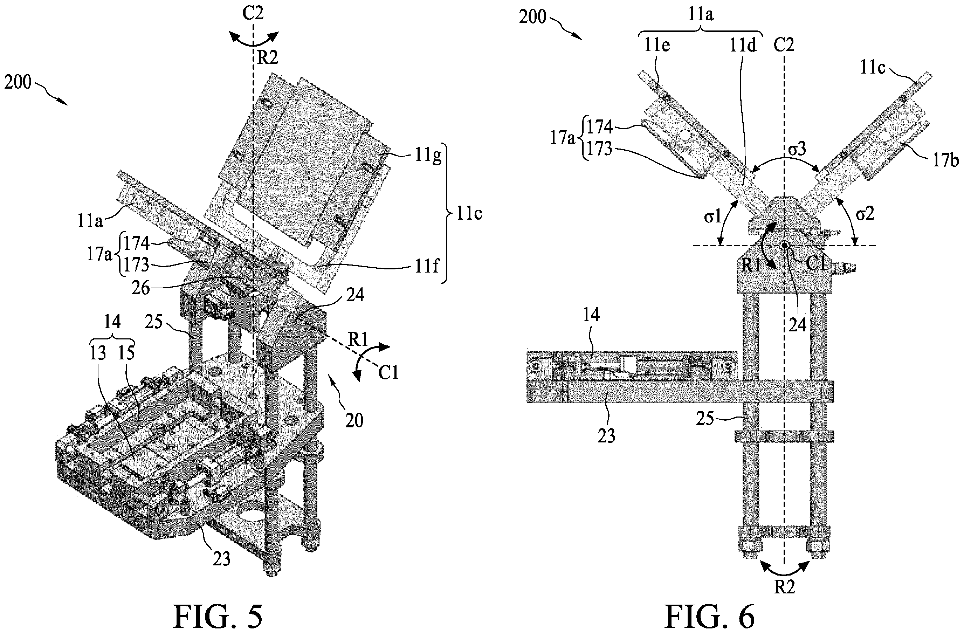

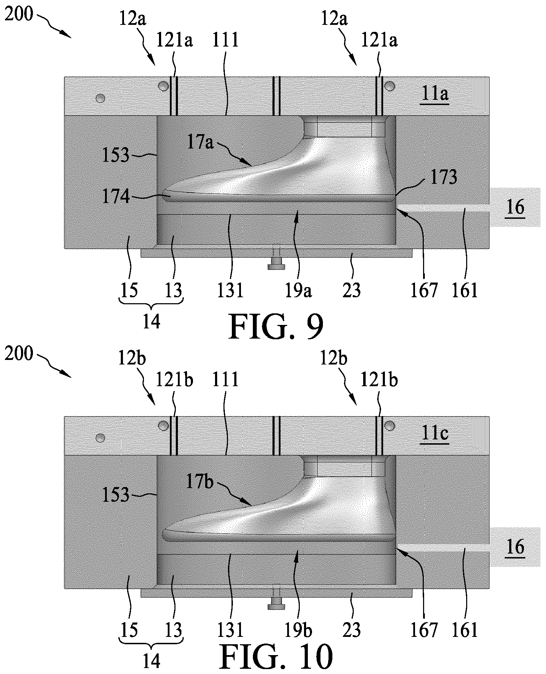

FIGS. 5, 6, 7 and 8 are schematic perspective views of a molding device 200 in accordance with some embodiments of the present disclosure. FIG. 9 is a schematic perspective view of a portion of the molding device 200 in accordance with some embodiments of the present disclosure. For ease of illustration, reference numerals with similar or same functions and properties are repeated in different embodiments and figures.

In some embodiments, referring to FIGS. 5, 6, 7 and 8, a molding device 200 is similar to the molding device 100, and further includes a third mold 11c attached to and movable by the position control mechanism 20. The third mold 11c can be placed on and engaged with the outer middle mold 15. In some embodiments, the provision of the molding device 200 includes conveying the outer middle mold 15 towards the lower mold 13, and subsequently disposing the first mold 11a or the third mold 11c over the outer middle mold 15. In some embodiments, the third mold 11c is alignable with the lower mold 13. The third mold 11c is rotatable about the first axis C1 by the hinge 24 of the position control mechanism 20 and about a second axis C2 orthogonal to the first axis C1 by the pivot 26 of the position control mechanism 20. The first mold 11a and the third mold 11c are rotatable together about the second axis C2. In some embodiments, the first mold 11a is rotatable about the second axis C2 by a pivot 26 of the position control mechanism 20.

In some embodiments, the molding device 200 including the first mold 11a, the second mold 14, the third mold 11c, a fourth mold 17a, a fifth mold 17b, and the position control mechanism 20. In some embodiments, the first mold 11a and the third mold 11c are attached to the position control mechanism 20, and second mold 14 including the outer middle mold 15 and the lower mold 13 are disposed on the platform 23 of the position control mechanism 20.

In some embodiments, each of the molding device 100 (as shown in FIG. 2) and the molding device 200 further includes a fourth mold 17a attaches to the first mold 11a. In some embodiments, the first mold cavity 19a is defined by the first mold 11a the second mold 14 and the fourth mold 17a when the first mold 11a is disposed opposite to the second mold 14 and the fourth mold 17a is surrounded by the first mold cavity 19a. In some embodiments, the fourth mold 17a includes a shoe last.

In some embodiments, the molding device 200 further includes a fifth mold 17b attaches to the third mold 11c. In some embodiments, the fifth mold 17b includes a shoe last. The position control mechanism 20 is configured to move the first mold 11a and the fourth mold 17a relative to the second mold 14, and configured to move the third mold 11c and the fifth mold 17b relative to the second mold 14. The first mold 11a and the third mold 11c are moveably attached to the second mold 14 due to the operation of the position control mechanism 20.

In some embodiments, the position control mechanism 20 drives or actuates the first mold 11a and the third mold 11c to move toward or away from the second mold 14. It can be understood that a maximum displacement of the first mold 11a and the outer middle mold 15 and a maximum displacement of the third mold 11c and the outer middle mold 15 are limited by the position control mechanism 20. In some embodiments, the first distance D1 between the first mold 11a and the second mold 14 is controlled by the position control mechanism 20.

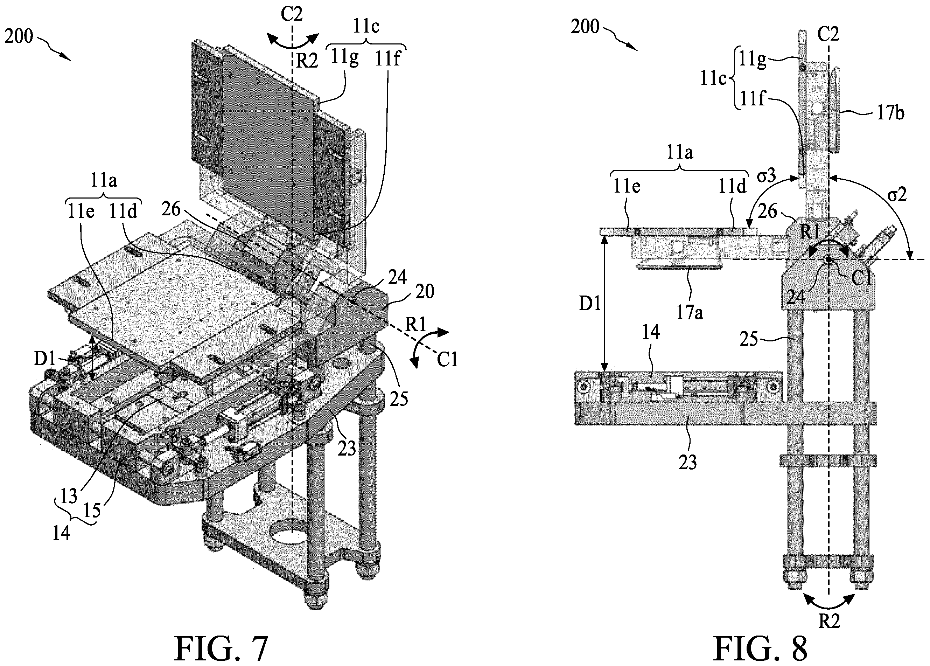

In some embodiments, the position control mechanism 20 is configured to drive or actuate the first mold 11a to move upward so as to generate the first distance D1 between the second mold 14 and the first mold 11a when the molding device 200 is in an open configuration. In some embodiments, the position control mechanism 20 is configured to generate a relative movement between the first mold 11a and the second mold 14. As shown in FIG. 8, the molding device 200 is in an open configuration, and the first distance D1 reaches its maximum value. In some embodiments, the position control mechanism 20 is configured to drive or actuate the third mold 11c to move upward so as to generate a gap (not shown) between the second mold 14 and the third mold 11c when the molding device 200 is in an open configuration. In some embodiments, the position control mechanism 20 is configured to generate a relative movement between the third mold 11c and the second mold 14.

In some embodiments, the position control mechanism 20 is rotatable about the second axis C2 and along a second direction R2, and the first mold 11a and the third mold 11c can be positioned above the second mold 14 in sequence as the position control mechanism 20 rotates about the second axis C2. The second direction R2 is clockwise or anti-clockwise. In some embodiments, referring to FIGS. 7 and 8, when the first mold 11a is disposed above and align with the second mold 14 including the lower mold 13 and the outer middle mold 15 from a top view perspective, the third mold 11c and the second mold 14 are laterally offset from a top view perspective. In some embodiments, when the third mold 11c is disposed above and aligned with the second mold 14 from a top view perspective, the first mold 11a and the second mold 14 are laterally offset from a top view perspective (not shown).

In some embodiments, the first mold 11a and the third mold 11c are rotatable about the first axis C1 and along the first direction R1. In some embodiments, the third angle σ3 is fixed during rotation of the first mold 11a and the third mold 11c about the first axis C1. In some embodiments, the position control mechanism 20 attaches to a first end 11d of the first mold 11a and configured to tilt the first mold 11a relative to the second mold 14. In some embodiments, the position control mechanism 20 is configured to tilt the first mold 11a relative to the lower mold 13 and the outer middle mold 15 to move a second end 11e of the first mold 11a higher than the first end 11d of the first mold 11a (as shown in FIG. 5 and FIG. 6). The first mold 11a may be tilted by the position control mechanism 20 when the first distance D1 between the first mold 11a and the outer middle mold 15 is greater than or equal to zero. In some embodiments, before the fourth mold 17a is tilted, a bottom surface of the first mold 11a is parallel to a top surface of the outer middle mold 15. In some embodiments, the position control mechanism 20 is configured to generate a relative tilt between the fourth mold 17a and the outer middle mold 15. In some embodiments, when the first mold 11a and the fourth mold 17a are tilted (as shown in FIG. 5 and FIG. 6), the first angle σ1 is present between the first mold 11a and the second mold 14. In some embodiments, the first angle σ1 ranges between 0 and 90 degree. In some embodiments, the first angle σ1 ranges between 20 and 70 degree. In some embodiments, the first angle σ1 is 45 degree when the position control mechanism 20 rotates about the second axis C2.

In some embodiments, the position control mechanism 20 attaches to a first end 11f of the third mold 11c and configured to tilt the third mold 11c relative to the second mold 14. In some embodiments, the position control mechanism 20 is configured to tilt the third mold 11c relative to the second mold 14 to move a second end 11g of the third mold 11c higher than the first end 11f of the third mold 11c. The third mold 11c may be tilted by the position control mechanism 20 when a gap (not shown) between the third mold 11c and the second mold 14 is greater than or equal to zero. In some embodiments, before the third mold 11c is tilted, a bottom surface of the third mold 11c is parallel to the top surface of the outer middle mold 15. In some embodiments, the position control mechanism 20 is configured to generate a relative tilt between the third mold 11c and the outer middle mold 15. In some embodiments, when the third mold 11c and the fifth mold 17b are tilted, a second angle σ2 is present between the third mold 11c and the second mold 14. In some embodiments, the second angle σ2 ranges between 0 and 90 degree. In some embodiments, the second angle σ2 ranges between 20 and 70 degree. In some embodiments, the second angle σ2 is 45 degree when the position control mechanism 20 rotates about the second axis C2.

In some embodiments, referring to FIGS. 5 and 6, the fourth mold 17a includes a first end 173 and a second end 174 opposite to the first end 173, and the position control mechanism 20 is configured to tilt the fourth mold 17a relative to the second mold 14 to move the second end 174 of the fourth mold 17a higher than the first end 173 of the fourth mold 17a.

In some embodiments, when the first mold 11a and the third mold 11c are attached to the position control mechanism 20, a third angle σ3 is present between the first mold 11a and the third mold 11c. In some embodiments, the third angle σ3 ranges between 0 and 180 degree. In some embodiments, the third angle σ3 ranges between 40 and 140 degree. In some embodiments, the third angle σ3 is 90 degree when the position control mechanism 20 rotates about the second axis C2. In some embodiments, the third angle σ3 is fixed during rotation of the first mold 11a and the third mold 11c about the second axis C2. In some embodiments, the third angle σ3 varies during rotation of the first mold 11a and the third mold 11c about the second axis C2. In other words, at least one of the first mold 11a and the third mold 11c is rotatable about the first axis C1 during rotation of the first mold 11a and the third mold 11c about the second axis C2.

FIGS. 9 and 10 are cross-sectional views of portions of the molding device 200. In some embodiments, the first mold 11a and the third mold 11c are in different configurations. In some embodiments, the first mold 11a and the third mold 11c are in similar configurations. In some embodiments, referring to FIG. 9, the first mold cavity 19a is defined by the first mold 11a, the outer middle mold 15, the fourth mold 17a, and the lower mold 13 when the first mold 11a is disposed opposite to the second mold 14 and the fourth mold 17a is surrounded by the first mold cavity 19a, and the molding device 200 is in a first closed configuration. In some embodiments, when the first mold 11a is disposed opposite to the second mold 14, the third mold 11c is offset from the first mold 11a substantially in a right angle.

In some embodiments, a first feeding port 12a extends through the first mold 11a. In some embodiments, the first mold 11a includes the first feeding port 12a. The first feeding port 12a has an opening 121a disposed on the first mold 11a. In some embodiments, the second mold 14 includes the first feeding port 12a. In some embodiments, the outer middle mold 15 or the lower mold 13 includes the first feeding port 12a. In some embodiments, the first feeding port 12a is communicable with the first mold cavity 19a when the molding device 200 is in the first closed configuration as shown in FIG. 9.

Alternatively, in some embodiments, the first mold cavity 19a is accessible through a plurality of first feeding ports 12a. For simplicity and clarity, two first feeding ports 12a are illustrated, however, it can be understood that any suitable numbers of the first feeding ports 12a can be configured at the first mold 11a. In some embodiments, instead of configuring the first feeding ports 12a at the first mold 11a, the first feeding ports 12a are disposed at the lower mold 13 or the outer middle mold 15 for accessing the first mold cavity 19a. In some embodiments, each of the first feeding ports 12a can be configured at the first mold 11a, a top surface 131 of the lower mold 13, an inner sidewall 153 of the outer middle mold 15 or any other suitable positions as long as the first feeding port 12a is communicable with the first mold cavity 19a.

In some embodiments, the molding device 200 further includes one or more pressure-regulating systems 16. In some embodiments, the pressure-regulating systems 16 attaches to the second mold 14. In some embodiments, the pressure-regulating systems 16 attaches to the lower mold 13 or the outer middle mold 15. In some embodiments, when the first mold 11a is disposed opposite to the second mold 14, the pressure-regulating systems 16 including a gas conduit 161 and a junction point 167 is in connection with the first mold cavity 19a and the gas conduit 161. In some embodiments, a plurality of junction points 167 are disposed at the second mold 14 and in connection with the first mold cavity 19a. In some embodiments, the junction points 167 are configured to allow a fluid or gas to enter into or exit from the first mold cavity 19a. The location, shape and number of the junction points 167 are not particularly limited, and may be adjusted depending on the needs. In some embodiments, each of the junction points 167 is a hole. In some embodiments, the junction point 167 is configured to supply gas or discharge gas.

In some embodiments, the pressure-regulating systems 16 further includes a pressure-sensing unit (not shown) is configured to sense the pressure in the first mold cavity 19a. The pressure-sensing unit (not shown) is not limited to any particular type, as long as it can sense the pressure and provide pressure information after sensing the pressure in the first mold cavity 19a. The pressure-regulating system 16 changes the condition at which the gas exits from/enters into the first mold cavity 19 in accordance with the pressure information provided by the pressure-sensing unit (not shown), so as to adjust the pressure in the first mold cavity 19a, in such a manner that the composite thus obtained has the desired predetermined shape and property. In some embodiments, the pressure-sensing unit (not shown) is disposed within the first mold cavity 19a.

In some embodiments, one end of the first gas conduit 161 is coupled to the junction point 167, and the other end of the first gas conduit 161 is coupled to a gas controller 163. In some embodiments, the gas controller 163 is configured to supply or exit a fluid or gas, in which a suitable fluid or gas may be supplied or exit depending on the needs; for example, the fluid or gas may be air, inert gas, etc., but the present disclosure is not limited thereto.

In some embodiments, referring to FIG. 10, a second mold cavity 19b is defined by the third mold 11c, the outer middle mold 15, the lower mold 13, and the fifth mold 17b when the molding device 200 is in a second closed configuration. In some embodiments, when the third mold 11c is disposed opposite to the second mold 14, the first mold 11a is offset from the third mold 11c substantially in a right angle.

In some embodiments, a second feeding port 12b extends through the third mold 11c. In some embodiments, the third mold 11c includes the second feeding port 12b. The second feeding port 12b has an opening 121b disposed on the third mold 11c. In some embodiments, the second mold 14 includes the second feeding port 12b. In some embodiments, the second feeding port 12b is communicable with the second mold cavity 19b when the third mold 11c is disposed opposite to the second mold 14 and the fifth mold 17b is surrounded by the second mold cavity 19b, and the molding device 200 is in the second closed configuration as shown in FIG. 10.

Alternatively, in some embodiments, the second mold cavity 19b is accessible through a plurality of second feeding ports 12b. For simplicity and clarity, two second feeding ports 12b are illustrated, however, it can be understood that any suitable numbers of the second feeding ports 12b can be configured at the third mold 11c. In some embodiments, instead of configuring the second feeding port 12b at the third mold 11c, the second feeding port 12b is disposed at the lower mold 13 or the outer middle mold 15 for accessing the second mold cavity 19b. In some embodiments, each of the second feeding ports 12b can be configured at the third mold 11c, the top surface 131 of the lower mold 13, the inner sidewall 153 of the outer middle mold 15 or any other suitable positions as long as the second feeding port 12b is communicable with the second mold cavity 19b.

In some embodiments, when the third mold 11c is disposed opposite to the second mold 14, the pressure-regulating systems 16 including the gas conduit 161 and the junction point 167 is in connection with the second mold cavity 19b and the gas conduit 161. In some embodiments, a plurality of junction points 167 are disposed at the second mold 14 and in connection with the second mold cavity 19b. In some embodiments, the junction points 167 are configured to allow a fluid or gas to enter into or exit from the second mold cavity 19b.

In some embodiments, the pressure-regulating systems 16 further includes a pressure-sensing unit (not shown) is configured to sense the pressure in the second mold cavity 19b. The pressure-sensing unit (not shown) is not limited to any particular type, as long as it can sense the pressure and provide pressure information after sensing the pressure in the second mold cavity 19b. The pressure-regulating system 16 changes the condition at which the gas exits from/enters into the second mold cavity 19b in accordance with the pressure information provided by the pressure-sensing unit (not shown), so as to adjust the pressure in the second mold cavity 19b, in such a manner that the composite thus obtained has the desired predetermined shape and property. In some embodiments, the pressure-sensing unit (not shown) is disposed within the second mold cavity 19b.

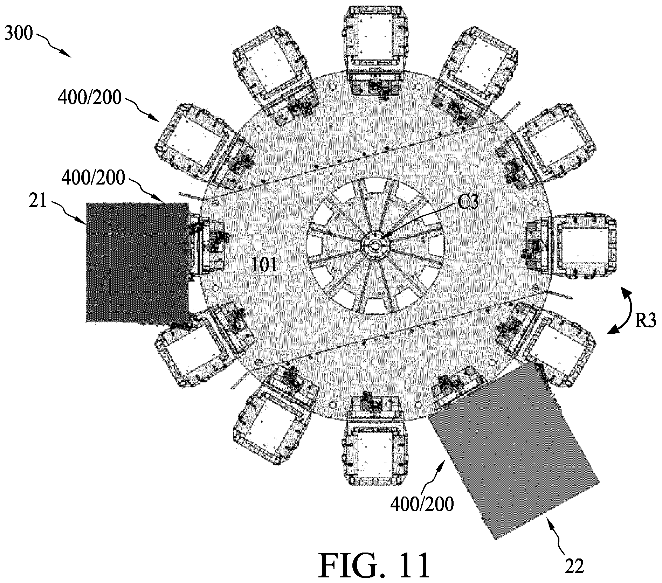

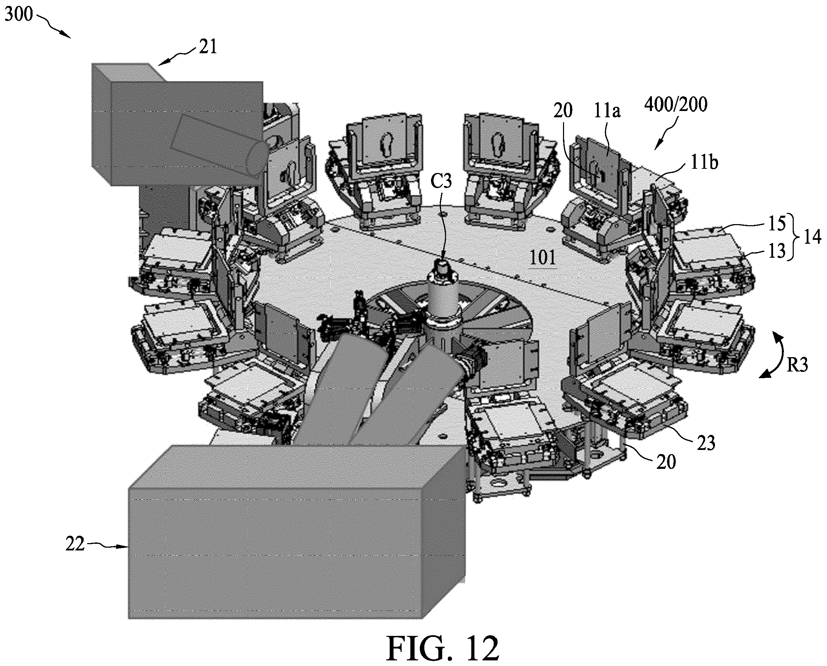

FIG. 11 is a top view of an injection molding system 300 in accordance with some embodiments of the present disclosure. FIG. 12 is a schematic perspective view of an injection molding system 300 in accordance with some embodiments of the present disclosure.

In some embodiments, referring to FIGS. 11 and 12, the injection molding system 300 includes a carrier 101 having a plurality of molding stations 400, and each of the molding station 400 is configured to carry the molding device 100 or the molding device 200. In some embodiments, the molding device 200 illustrated in FIGS. 5 to 8 is disposed in one of the molding stations 400, and includes the position control mechanism 20, the first mold 11a, the third mold 11c, and the second mold 14 held by the position control mechanism 20. The position control mechanism 20 is configured to individually move the first mold 11a, the second mold 14 and the third mold 11c.

A first injection station 21 is disposed adjacent to the carrier 101 and configured to inject a first polymeric material into the first mold cavity 19a of the molding device 200 defined by the first mold 11a and the second mold 14 including the outer middle mold 15, the lower mold 13. In some embodiments, a second injection station 22 is disposed adjacent to the carrier 101 and separated from the first injection station 21, and second injection station 22 is configured to inject a second polymeric material into a second mold cavity 19b of the molding device 200 defined by the second mold 14 and the third mold 11c.

In some embodiments, the molding stations 400 are arranged on the carrier 101, and a plurality of molding devices 200 are disposed over the carrier 101 and disposed in the molding stations 400 respectively. In some embodiments, the first injection station 21 and the second injection station 22 are disposed adjacent to the carrier 101 and over two of the molding station 400.

In some embodiments, the first injection station 21 includes a first extruding system (not shown) and a first discharging channel (not shown) disposed over one of the molding station 400. In some embodiments, the first polymeric material produced by the first injection station 21 is a mixture of a first polymeric material and a first blowing agent. In some embodiments, the first discharging channel is communicable with the first extruding system and including a first outlet disposed away from the first extruding system and configured to discharge the first polymeric material into the molding device 200 through the first feeding port 12a. In some embodiments, the molding device 200 is configured to receive the first polymeric material from the first outlet of the first discharging channel. In some embodiments, the first feeding port 12a is communicable with the first mold cavity 19a and engageable with the first outlet. In some embodiments, the first polymeric material is non-foamable or slightly foamable.

In some embodiments, the second injection station 22 includes a second extruding system (not shown) and a second discharging channel (not shown) disposed over one of the molding station 400. In some embodiments, the second polymeric material produced by the second injection station 22 is a mixture of a second polymeric material and a second blowing agent. In some embodiments, the second discharging channel is communicable with the second extruding system and including a second outlet disposed away from the second extruding system and configured to discharge the second polymeric material into the molding device 200 through the second feeding port 12b. In some embodiments, the molding device 200 is configured to receive the second polymeric material from the second outlet of the second discharging channel. In some embodiments, the second feeding port 12b is communicable with the second mold cavity 19b and engageable with the second outlet. In some embodiments, the second polymeric material is non-foamable or slightly foamable.

In some embodiments, the carrier 101 is in an annular shape. In some embodiments, the carrier 101 is rotatable about a third center C3 and along a third direction R3. In some embodiments, the carrier 101 is rotatable in clockwise or anti-clockwise. In some embodiments, the carrier 101 is rotated at a predetermined interval.

In some embodiments, the first injection station 21 and the second injection station 22 are separated from each other. In some embodiments, a predetermined distance is between the first injection station 21 and the second injection station 22. In some embodiments, the first injection station 21 and the second injection station 22 are operated and controlled automatically. In some embodiments, the first injection station 21 and the second injection station 22 communicable with each other through any suitable communication protocol such as programmable logic control (PLC) protocol or the like.

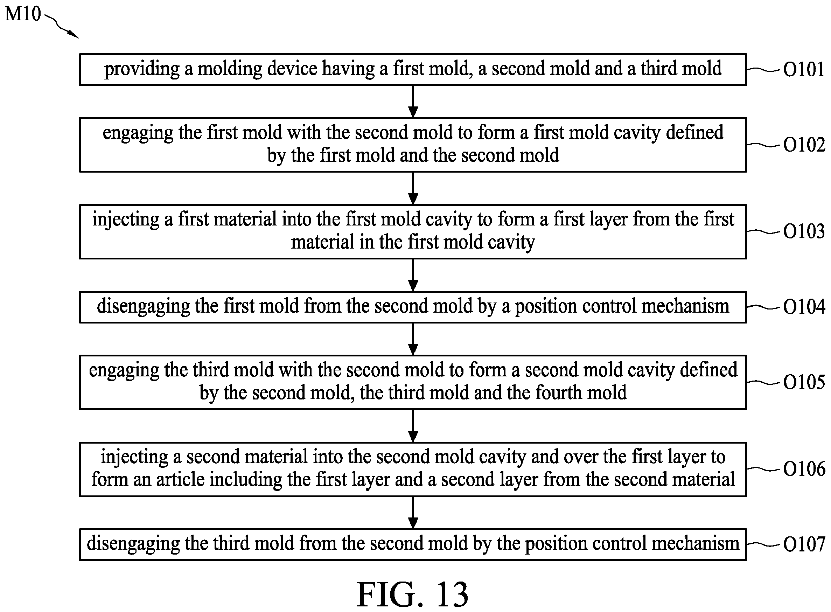

In the present disclosure, a molding method M10 is also disclosed. FIG. 13 is a flowchart showing a method M10 of molding method in accordance with some embodiments of the present disclosure. The method M10 includes several operations:
(O101) providing a molding device having a first mold, a second mold and a third mold;
(O102) engaging the first mold with the second mold to form a first mold cavity defined by the first mold and the second mold; (0103) injecting a first polymeric material into the first mold cavity to form a first layer from the first polymeric material in the first mold cavity; (0104) disengaging the first mold from the second mold by a position control mechanism; (0105) engaging the third mold with the second mold to form a second mold cavity defined by the second mold, the third mold and the fourth mold;
(O106) injecting a second polymeric material into the second mold cavity and over the first layer to form an article including the first layer and a second layer from the second polymeric material; and (0107) disengaging the third mold from the second mold by the position control mechanism. In some embodiments, the method M10 includes using the molding device 200.

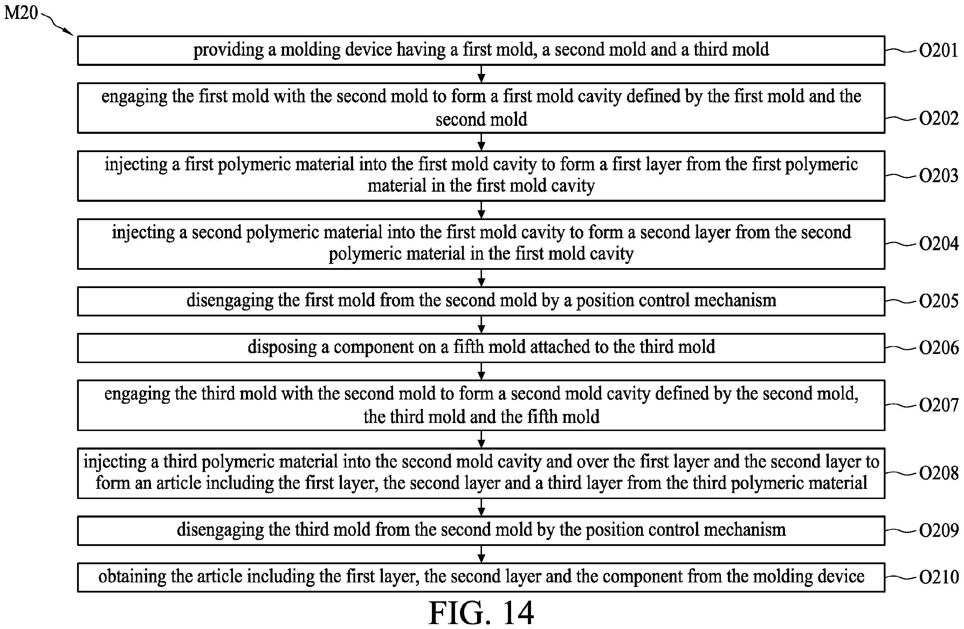

In the present disclosure, a molding method M20 is also disclosed. FIG. 14 is a flowchart showing a method M20 of molding method in accordance with some embodiments of the present disclosure. The method M20 includes several operations:
(O201) providing a molding device having a first mold, a second mold and a third mold;
(O202) engaging the first mold with the second mold to form a first mold cavity defined by the first mold and the second mold; (O203) injecting a first polymeric material into the first mold cavity to form a first layer from the first polymeric material in the first mold cavity; (O204) injecting a second polymeric material into the first mold cavity to form a second layer from the second polymeric material in the first mold cavity; (O205) disengaging the first mold from the second mold by a position control mechanism; (O206) disposing a component on a fifth mold attached to the third mold; (O207) engaging the third mold with the second mold to form a second mold cavity defined by the second mold, the third mold and the fifth mold; (O208) injecting a third polymeric material into the second mold cavity and over the first layer and the second layer to form an article including the first layer, the second layer and a third layer from the third polymeric material; (O209) disengaging the third mold from the second mold by the position control mechanism; and (0210) obtaining the article including the first layer, the second layer and the component from the molding device.

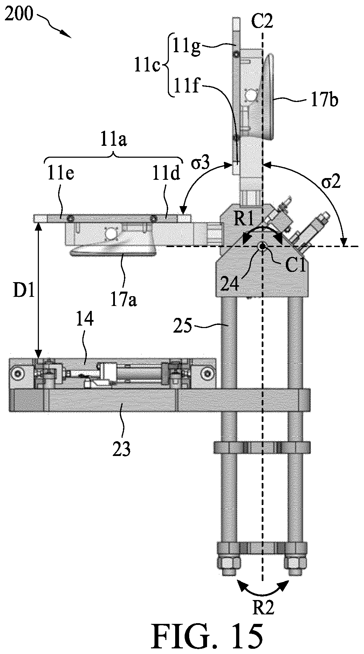

In some embodiments, the molding method M20 includes using the molding device 200. The method includes a number of operations and the description and illustration are not deemed as a limitation to the sequence of operations. FIGS. 15 to 25 are schematic perspective views of one or more operations of the molding method M20 in accordance with some embodiments of the present disclosure.

In some embodiments, an injection molding system 300 of the operation 0201 of the method M20 in accordance with some embodiments of the present disclosure is illustrated in FIGS. 11 and 12. In some embodiments, the molding method M20 includes operation 0201, which includes providing a molding device 200 having a first mold 11a, a second mold 14, a third mold 11c, and a position control mechanism 20. In some embodiments, the second mold 14 includes a lower mold 13 and an outer middle mold 15, and a fourth mold 17a is attaches to the first mold 11a. In some embodiments, the molding device 200 is provided or received as shown in FIGS. 5, 6, 7 and 8. In some embodiments, the molding device 200 is configured to forming an article. In some embodiments, the molding device 200 including pressure-regulating systems 16 having a junction point 167, a gas conduit 161 and a pressure sensing unit (not shown) is provided or received.

In some embodiments, referring to FIG. 15, during the operation 0201, the molding device 200 is in an opened configuration. In some embodiments, during operation 0201, the first mold 11a and the second mold 14 are separated from each other. In some embodiments, the first mold 11a is moved vertically to a first position above the second mold 14. At the first position, the first mold 11a is aligned with the second mold 14 of the molding device 200. In some embodiments, a first distance D1 between the first mold 11a and the second mold 14 is greater than 0.

In some embodiments, the position control mechanism 20 moves the first mold 11a toward or away from the second mold 14. In some embodiments, the position control mechanism 20 moves the second mold 14 disposed on the platform 23 toward or away from the first mold 11a. In some embodiments, the position control mechanism 20 holds the third mold 11c offset from the second mold 14. In some embodiments, the molding method M20 includes hingedly rotating the first mold 11a toward the second mold 14 or linearly moving the second mold 14 toward the first mold 11a to engage the first mold 11a with the second mold 14. In some embodiments, the molding method M20 includes pivotally rotating the first mold 11a and the third mold 11c to dispose the first mold 11a or the third mold 11c above the second mold 14.

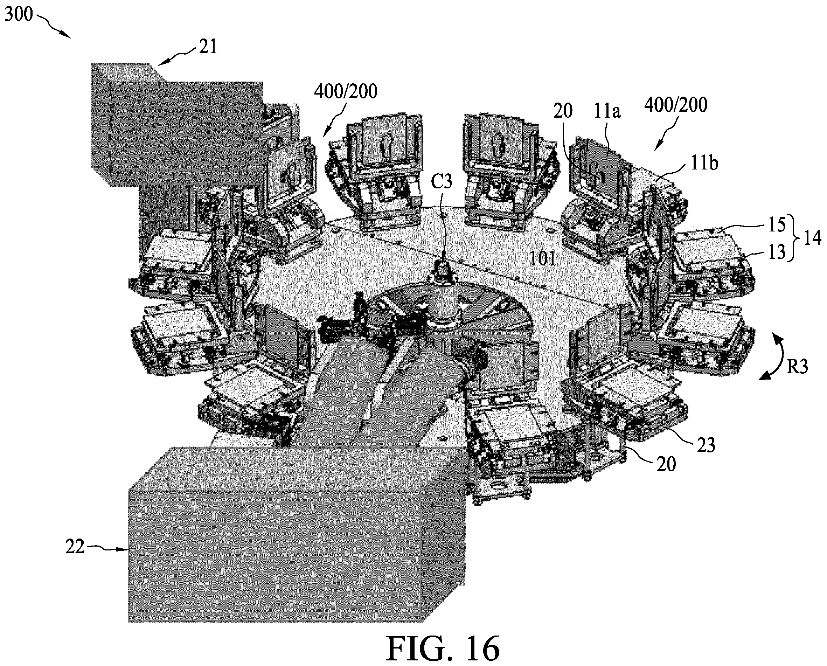

In some embodiments, referring to FIG. 16, a carrier 101 having a plurality of molding stations 400 is provided, and each molding stations 400 includes the molding device 200. In some embodiments, the molding device 200 is disposed in one of the molding stations 400 of the carrier 101. In some embodiments, a first injection station 21 configured to inject a first polymeric material into the molding device 200 and a second injection station 22 configure to inject a second polymeric material into the molding device 200 are provided and disposed adjacent to the carrier 101.

In some embodiments, the molding method M20 includes operation O202, which includes engaging the first mold 11a with the second mold 14 to form a first mold cavity 19a defined by the first mold 11a and the second mold 14.

In some embodiments, the position control mechanism 20 hingedly rotates the first mold 11a toward the second mold 14 about a first axis C1 and along a first direction R1 or linearly moving the second mold 14 toward the first mold 11a to engage the first mold 11a with the second mold 14. The first direction R1 is clockwise or anti-clockwise.

In some embodiments, the position control mechanism 20 pivotally rotates the first mold 11a and the third mold 11c about a second axis C2 and along a second direction R2 to dispose the first mold 11a or the third mold 11c above the second mold 14. The second direction R2 is clockwise or anti-clockwise. In some embodiments, the pivotal rotation and the hinged rotation are implemented sequentially and separately.

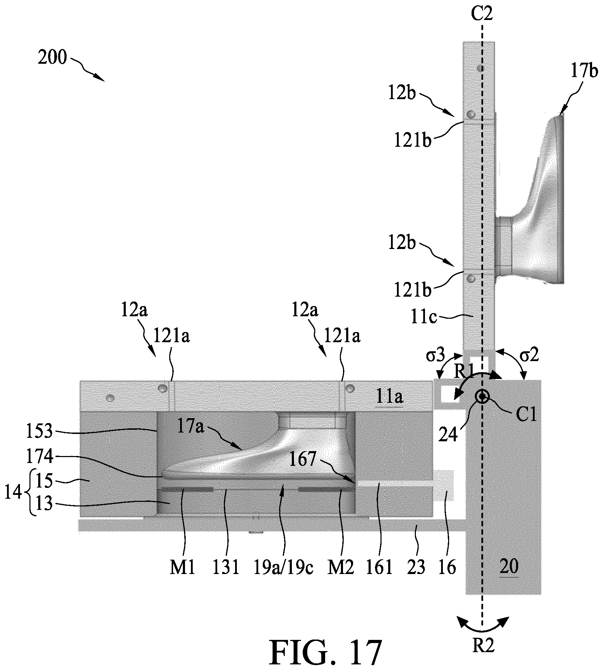

In some embodiments, referring to FIG. 17, the first mold 11a, the lower mold 13, the outer middle mold 15 and a fourth mold 17a of the molding device 200 is in a first closed configuration, and the third mold 11c is held by the position control mechanism 20. In some embodiments, the third mold 11c and the second mold 14 are laterally offset from a top view perspective.

In some embodiments, a second angle σ2 between the third mold 11c and the second mold 14 ranges between 0 and 90 degree. In some embodiments, when the molding device 200 is at the first closed configuration, the second angle σ2 is 90 degree. In some embodiments, a third angle σ3 between the first mold 11a and the third mold 11c ranges between 0 and 180 degree. In some embodiments, when the molding device 200 is at the first closed configuration, the third angle σ3 is 90 degree.

In some embodiments, the molding method M20 includes operation O203, which includes injecting a first polymeric material into the first mold cavity 19a to form a first layer M1 from the first polymeric material in the first mold cavity 19a.

Still referring to FIG. 17, a first polymeric material is injected into the first mold cavity 19a through one of the first feeding ports 12a. In some embodiments, the first polymeric material includes thermoplastic polyurethane (TPU), polyurethane (PU), plastics or any other suitable materials. In some embodiments, the first polymeric material includes a physical blowing agent such as supercritical fluid. In some embodiments, the physical blowing agent is gaseous nitrogen, carbon dioxide, etc. In some embodiments, the first polymeric material is foamable, non-foamable or slightly foamable. In some embodiments, the first polymeric material includes a first dye. In some embodiments, the first polymeric material forms a first layer M1 in the first mold cavity 19a. In some embodiments, the first layer M1 is formed between the first mold 11a and the lower mold 13. In some embodiments, the first layer M1 is formed between the fourth mold 17a and the lower mold 13.

In some embodiments, before the injection of the first polymeric material, a pressure in the first mold cavity 19a is sensed. In some embodiments, before the infection of the first polymeric material, a first gas (not shown) is injected into the first mold cavity 19a through the junction point 167 until the first mold cavity 19a is sensed to have a first predetermined pressure.

In some embodiments, the method further includes sensing the pressure in the first mold cavity 19a and filling the first polymeric material from the first feeding port 12a into the first mold cavity 19a having the first predetermined pressure. In some embodiments, the method further includes discharging a portion of the first gas (not shown) from the first mold cavity 19a through the junction point 167.

In some embodiments, a first force is applied to the second mold 14 toward the first mold 11a to facilitate the engagement of the first mold 11a and the second mold 14 when the molding device 200 is in the first closed configuration. In some embodiments, the first force is applied to the second mold 14 before the injection of the first gas into the first mold cavity 19a or before the injection of the first polymeric material into the first mold cavity 19a. In some embodiments, the first force is applied to the second mold 14 during the injection of the first gas into the first mold cavity 19a or during the injection of the first polymeric material into the first mold cavity 19a. In some embodiments, the platform 23 provides the first force to the second mold 14.

In some embodiments, the molding device 200 is disposed on the carrier 101, a first extruding system (not shown) and the molding device 200 is disposed in the first injection station 21, and the first polymeric material is injected from the first extruding system into the molding device 200 in the first injection station 21. In some embodiments, the first polymeric material is injected into the molding device 200 through the first mold 11a.

In some embodiments, at the first injection station 21, the first mold 11a attaches the outer middle mold 15, and the third mold 11c held by the position control mechanism 20 is disposed away from the outer middle mold 15. In some embodiments, the first mold 11a is disposed under the first extruding system. In some embodiments, the third mold 11c is disposed above the position control mechanism 20.

In some embodiments, the molding method M20 includes operation O204, which includes injecting a second polymeric material into the first mold cavity 19a to form a second layer M2 from the second polymeric material in the first mold cavity 19a.

Still referring to FIG. 17, a second polymeric material is injected into the first mold cavity 19a through one of the first feeding ports 12a. In some embodiments, the first polymeric material and the second polymeric material are injected into the first mold cavity 19a. In some embodiments, the second polymeric material includes thermoplastic polyurethane (TPU), polyurethane (PU), plastics or any other suitable materials. In some embodiments, the second polymeric material includes a physical blowing agent such as supercritical fluid. In some embodiments, the physical blowing agent is gaseous nitrogen, carbon dioxide, etc. In some embodiments, the second polymeric material is foamable, non-foamable or slightly foamable. In some embodiments, the second polymeric material includes a second dye. The second dye may be similar to or different from the first dye. In some embodiments, the first polymeric material and the second polymeric material are non-foamable. In some embodiments, the first polymeric material and the second polymeric material are slightly foamable. In some embodiments, a composition of the second polymeric material is similar to or different from a composition of the first polymeric material. In some embodiments, the first polymeric material and the second polymeric material have different physical properties, such as different densities.

In some embodiments, the second polymeric material forms a second layer M2 adjacent to the first layer M1. In some embodiments, the second layer M2 connects the first layer M1. In some embodiments, the second layer M2 is spaced apart from the first layer M1. In some embodiments, the second layer M2 is formed between the first mold 11a and the lower mold 13. In some embodiments, the second layer M2 is formed between the fourth mold 17a and the lower mold 13. In some embodiments, the first polymeric material and the second polymeric material are injected simultaneously. In some embodiments, the first layer M1 and the second layer M2 are formed simultaneously. In some embodiments, the first layer M1 and the second layer M2 have different physical properties, such as different densities. The first layer M1 and the second layer M2 can be the same or different colors.

In some embodiments, before the injection of the second polymeric material, the pressure in the first mold cavity 19a is sensed. In some embodiments, before the injection of the second polymeric material, a second gas (not shown) is injected into the first mold cavity 19a through the junction point 167 until the first mold cavity 19a is sensed to have a second predetermined pressure.

In some embodiments, the molding method M20 further includes sensing the pressure in the first mold cavity 19a and filling the second polymeric material from the first feeding port 12a into the first mold cavity 19a having the second predetermined pressure. In some embodiments, the molding method M20 further includes discharging a portion of the second gas (not shown) from the first mold cavity 19a through the junction point 167. In some embodiments, the second predetermined pressure and the first predetermined pressure are the same.

In some embodiments, a second force is applied to the second mold 14 before the injection of the second gas into the first mold cavity 19a or before the injection of the second polymeric material into the first mold cavity 19a. In some embodiments, the second force is applied to the second mold 14 during the injection of the second gas into the first mold cavity 19a or during the injection of the second polymeric material into the first mold cavity 19a.

In some embodiments, the molding device 200 is disposed on the carrier 101, a first extruding system (not shown) and the molding device 200 is disposed in the first injection station 21, and the second polymeric material is injected from the first extruding system into the molding device 200 in the first injection station 21. In some embodiments, the second polymeric material is injected into the molding device 200 through the first mold 11a.

In some embodiments, after the first layer M1 and the second layer M2 are formed, a third mold cavity 19c is formed within the molding device 200. In some embodiments, a volume of the third cavity 19c is less than a volume of the first cavity 19a. In some embodiments, the volume of the third cavity 19c is greater than zero.

In some embodiments, the molding method M20 includes operation O205, which includes disengaging the first mold 11a from the second mold 14 by the position control mechanism 20.

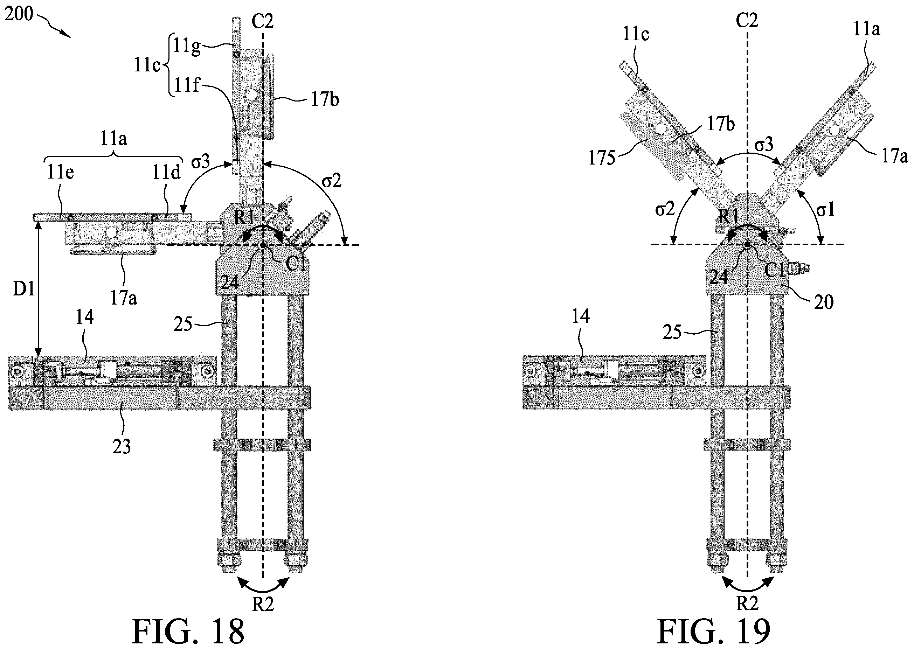

In some embodiments, referring to FIG. 18, after the first layer M1 and the second layer M2 are formed in the molding device 200, the first mold 11a is moved away from the second mold 14, the first layer M1 and the second layer M2. In some embodiments, the second mold 14, the first layer M1 and the second layer M2 are transfer together as the carrier 101 rotates.

In some embodiments, after the first layer M1 and the second layer M2 are formed, the molding device 200 is opened. In some embodiments, the second force stops applying to the molding device 200 before disengaging the first mold 11a from the second mold 14. In some embodiments, after the first layer M1 and the second layer M2 are formed, the first mold 11a is moved away from the second mold 14 and the first layer M1 and the second layer M2 are exposed.

In some embodiments, during the movement, the molding device 200 is in an opened configuration as shown in FIG. 18. In some embodiments, during the movement, the first mold 11a and the second mold 14 are separated from each other. In some embodiments, the first mold 11a is moved vertically back to the first position above the second mold 14. At the first position, the first mold 11a is aligned with the second mold 14 of the molding device 200. In some embodiments, the first distance D1 between the first mold 11a and the second mold 14 is greater than 0. In some embodiments, the position control mechanism 20 moves the first mold 11a away from the second mold 14. In some embodiments, the position control mechanism 20 moves the second mold 14 disposed on the platform 23 away from the first mold 11a by moving the platform 23 along the rail 25.

In some embodiments, referring back to FIG. 16, after the first layer M1 and the second layer M2 are formed, the molding device 200 moves from the first injection station 21 toward a second injection station 22. In some embodiments, the carrier 101 rotates about the about a third center C3 and along a third direction R3 to move the molding device 200 from the first injection station 21 toward the second injection station 22.

In some embodiments, referring to FIG. 19, after the first mold 11a and the second mold 14 are separated from each other, the position control mechanism 20 tilts the first mold 11a and the third mold 11c. In some embodiments, the first mold 11a and the third mold 11c are rotatable about a first axis C1 and along a first direction R1.

In some embodiments, an first angle σ1 is present between a bottom surface the first mold 11a and the top surface of the second mold 14, the second angle σ2 is present between a bottom surface of the third mold 11c and the top surface of second mold 14, and the third angle σ3 is present between the first mold 11a and the third mold 11c. In some embodiments, each of the first angle σ1 and the second angle σ2 is 45 degree, and the third angle σ3 is 90 degree.

In some embodiments, the first mold 11a and the third mold 11c are tilted by the position control mechanism 20, and the position control mechanism 20 rotates about a second axis C2 to move the third mold 11c toward the second mold 14 and to move the first mold 11a away from the second mold 14 as shown in FIG. 19.

In some embodiments, the molding method M20 includes operation O206, which includes disposing a component 175 on a fifth mold 17b attached to the third mold 11c.

In some embodiments, a component 175 attaches to the fifth mold 17b. In some embodiments, the component 175 is put on the fifth mold 17b. In some embodiments, the component 175 is conformal to the fifth mold 17b. In some embodiments, the component 175 includes a third polymeric material. In some embodiments, the component 175 is permeable to gas or fluid (such as air, supercritical fluid, inert gas, nitrogen, carbon dioxide, etc.). In some embodiments, the component 175 includes a fabric. In some embodiments, the component 175 is an insole, a footwear upper or any other suitable component of the footwear.

In some embodiments, a barrier layer (not shown) is disposed between the component 175 and the fifth mold 17b. In some embodiments, the barrier layer (not shown) is attached to an inner surface of the component 175 before putting the component 175 on the fifth mold 17b. The inner surface of the component 175 and the barrier layer (not shown) are disposed over the fifth mold 17b after putting the component 175 on the fifth mold 17b. In some embodiments, the barrier layer (not shown) is conformal to the component 175. In some embodiments, the barrier layer (not shown) is a TPU film.

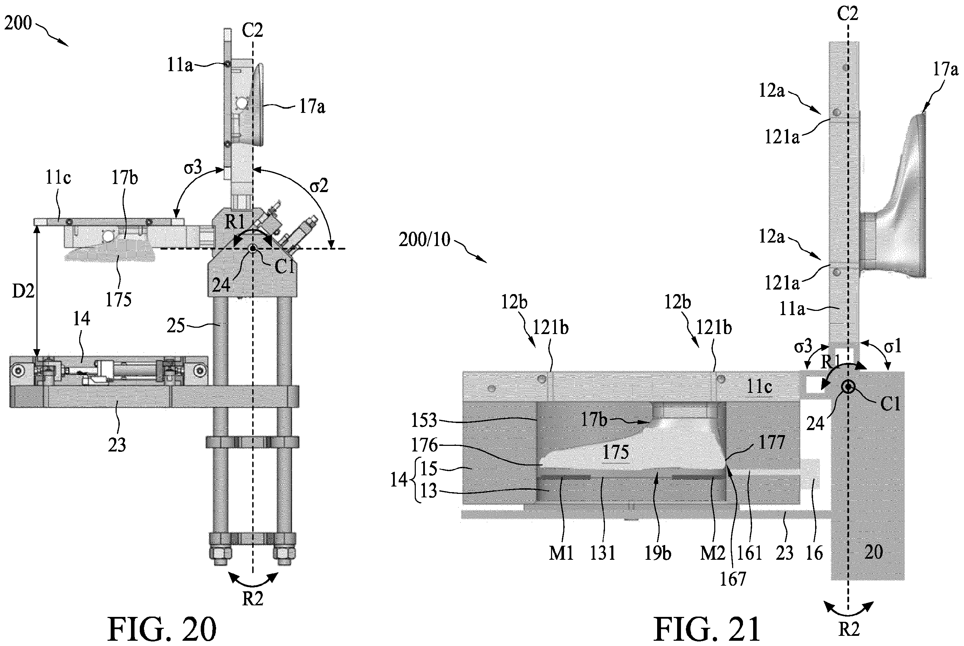

In some embodiments, referring to FIG. 20, after the position control mechanism 20 is rotated about the second axis C2 to move the third mold 11c toward the second mold 14, the first mold 11a and the third mold 11c are rotates about the first axis C1 and along the first direction R1, until the third mold 11c is disposed at a second position above the second mold 14, and the first mold 11a is disposed above the position control mechanism 20. At the second position, the third mold 11c is aligned with the second mold 14 of the molding device 200. In some embodiments, a second distance D2 between the third mold 11c and the second mold 14 is greater than 0. In some embodiments, each of the second angle σ2 and the third angle σ3 is 90 degree.

In some embodiments, the position control mechanism 20 moves the third mold 11c toward the second mold 14. In some embodiments, the position control mechanism 20 moves the second mold 14 disposed on the platform 23 toward the third mold 11c.

In some embodiments, the molding device 200 including the lower mold 13, the outer middle mold 15, the first layer M1 and the second layer M2 is transferred to and disposed in the second injection station 22. In some embodiments, a second extruding system (not shown) and the molding device 200 is disposed in the second injection station 22 after the rotation of the carrier 101.

In some embodiments, the fifth mold 17b and the component 175 are moved to a predetermined position above the first layer M1 and the second layer M2 as shown in FIG. 20, and then the first mold 11a, the fifth mold 17b and the component 175 are moved toward the first layer M1 and the second layer M2 until the fifth mold 17b is engaged with the second mold 14. In some embodiments, the molding device 200 is disposed under the second extruding system.

In some embodiments, the molding method M20 includes operation O207, which includes engaging the third mold 11c with the second mold 14 to form a second mold cavity 19b defined by the second mold 14, the third mold 11c and the fifth mold 17b.

In some embodiments, the position control mechanism 20 hingedly rotates the third mold 11c toward the second mold 14 about the first axis C1 and along the first direction R1 or linearly moving the second mold 14 toward the third mold 11c to engage the third mold 11c with the second mold 14.

In some embodiments, the position control mechanism 20 pivotally rotates the first mold 11a and the third mold 11c about the second axis C2 and along the second direction R2 to dispose the third mold 11c above the second mold 14. In some embodiments, the pivotal rotation and the hinged rotation are implemented sequentially and separately.

In some embodiments, referring to Fig. 21, the third mold 11c and the fifth mold 17b is engaged with the second mold 14, and the second mold cavity 19b is formed. In some embodiments, the molding device 200 including the second mold cavity 19b is in a second closed configuration. In some embodiments, the component 175 is disposed within the second mold cavity 19b. In some embodiments, the component 175 surrounds the fifth mold 17b and over the first layer M1 and the second layer M2. In some embodiments, the component 175 is surrounded by the second mold 14. In some embodiments, the component 175 is disposed between the fifth mold 17b and the second mold 14. In some embodiments, the second mold cavity 19b is defined by the component 175, the first layer M1 and the second layer M2.

In some embodiments, two ends 176, 177 of the components 175 attach the outer middle mold 15. In some embodiments, the barrier layer (not shown) is configured to prevent gas or fluid inside the second mold cavity 19b leaking out of the second mold cavity 19b.

In some embodiments, the molding method M20 includes operation O208, which includes injecting a third polymeric material into the second mold cavity 19b and over the first layer M1 and the second layer M2 to form an article 178 including the first layer M1, the second layer M2 and a third layer M3 from the third polymeric material.

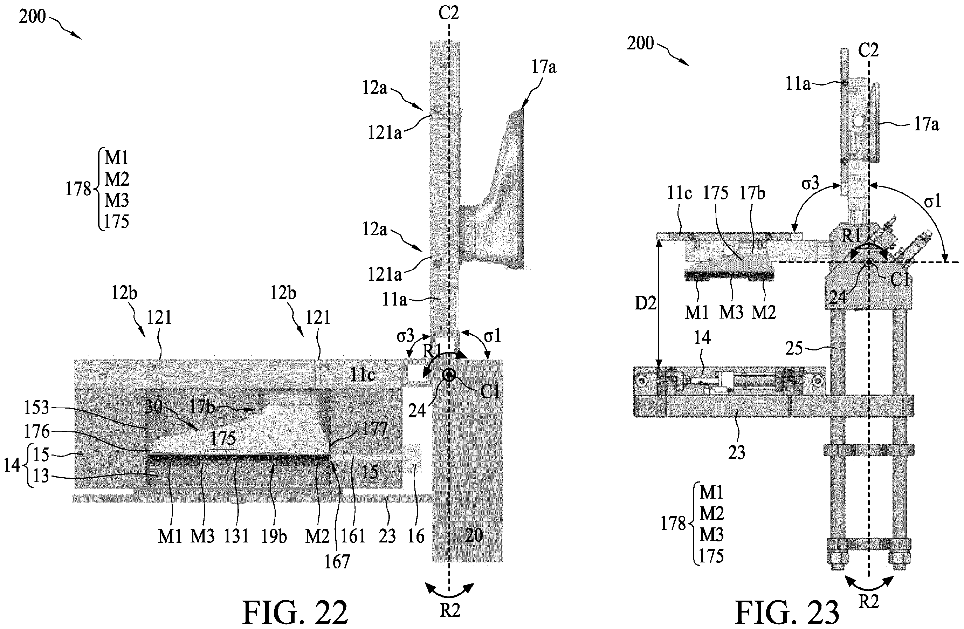

In some embodiments, referring to Fig. 22, the third polymeric material is injected from the second extruding system into the molding device 200 in the second injection station 22. In some embodiments, the third polymeric material is injected into the molding device 200 through the third mold 11c.

In some embodiments, the third polymeric material is injected into the second mold cavity 19b through one of the second feeding ports 12b. In some embodiments, the third polymeric material includes thermoplastic polyurethane (TPU), polyurethane (PU), plastics or any other suitable materials. In some embodiments, the third polymeric material includes a physical blowing agent such as supercritical fluid. In some embodiments, the physical blowing agent is gaseous nitrogen, carbon dioxide, etc. In some embodiments, the third polymeric material is foamable or slightly foamable. In some embodiments, a composition of the third polymeric material is similar to or different from the composition of the first polymeric material or the composition of the second polymeric material.

In some embodiments, the third layer M3 attaches to the component 175, the first layer M1, and the second layer M2. In some embodiments, the third layer M3 is disposed over the first layer M1 and the second layer M2, and the component 175 is disposed over the third layer M3. In some embodiments, the component 175, the first layer M1, the second layer M2 and the third layer M3 form an article 178. In some embodiments, the article 178 is a shoe. In some embodiments, a density of the third layer M3 is substantially less than a density of the first layer M1. In some embodiments, the density of the third layer M3 is substantially less than a density of the second layer M2.

In some embodiments, before the injection of the third polymeric material, a pressure in the second mold cavity 19b is sensed. In some embodiments, before the infection of the third polymeric material, a third gas (not shown) is injected into the second mold cavity 19b through the junction point 167 until the second mold cavity 19b is sensed to have a third predetermined pressure.

In some embodiments, the method further includes sensing the pressure in the second mold cavity 19b and filling the third polymeric material from the second feeding port 12b into the second mold cavity 19b having the third predetermined pressure. In some embodiments, the method further includes discharging a portion of the third gas (not shown) from the third mold cavity 19b through the junction point 167.

In some embodiments, a third force is applied to the second mold 14 toward the third mold 11c to facilitate the engagement of the third mold 11c and the second mold 14 when the molding device 200 is in the second closed configuration. In some embodiments, the third force is applied to the second mold 14 before the injection of the third gas into the second mold cavity 19b or before the injection of the third polymeric material into the second mold cavity 19b. In some embodiments, the third force is applied to the second mold 14 during the injection of the third gas into the second mold cavity 19b or during the injection of the third polymeric material into the second mold cavity 19b. In some embodiments, the platform 23 provides the third force to the second mold 14. In some embodiments, a fourth force is configured to press the first layer M1 and the second layer M2 toward the third layer M3 and the component 175. The fourth force is provided to facilitate the integration of the first layer M1, the second layer M2, the third layer M3 and the component 175.

In some embodiments, the third polymeric material is injected from the second extruding system (not shown) into the molding device 200 at the second injection station 22 as shown in FIG. 16.

In some embodiments, the molding method M20 includes operation O209, which includes disengaging the third mold 11c from the second mold 14 by the position control mechanism 20. In some embodiments, the fourth force stops applying to the molding device 200 before disengaging the third mold 11c from the second mold 14.

In some embodiments, referring to FIG. 23, after the first layer M1, the second layer M2, the third layer M3 are formed, the first layer M1, the second layer M2, the third layer M3 and the component 175 are removed from the second mold cavity 19b. In some embodiments, after the article 178 are formed within the molding device 200, the article 178 are removed from the second mold cavity 19b. In some embodiments, the molding device 200 is in an opened configuration while removing the article 178.

In some embodiments, after the article 178 is formed, the third mold 11c is disengaged from the second mold 14, so that the article 178 having the first layer M1, the second layer M2, the third layer M3 and the component 175 can be taken out from the second mold 14. In some embodiments, the article 178 having the first layer M1, the second layer M2, the component 175 and the barrier layer can be taken out from the molding device 200.

In some embodiments, the third mold 11c, the fifth mold 17b and the article 178 are moved away from the second mold 14. In some embodiments, the position control mechanism 20 moves the third mold 11c and the fifth mold 17b away from the second mold 14, and the article 178 attached to the fifth mold 17b are also moved away from the second mold 14. The second distance D2 after moving the third mold 11c and the fifth mold 17b away from the second mold 14 is greater than zero.

In some embodiments, before moving the third mold 11c, the fifth mold 17b and the article 178 away from the second mold 14, the first portion 151 and the second portion 152 of the outer middle mold 15 are moved away from each other to form a gap G2 between the first portion 151 and the second portion 152 as shown in FIG. 2, and the article 178 thereby may be separated from the outer middle mold 15 and be easily to remove from the second mold cavity 19b.

In some embodiments, the molding device 200 transfers from the second closed configuration to the opened configuration since the gap G2 is generated.

In some embodiments, the molding method M20 includes operation 0210, which includes obtaining the article 178 including the first layer M1, the second layer M2 and the component 175 from the molding device 200.

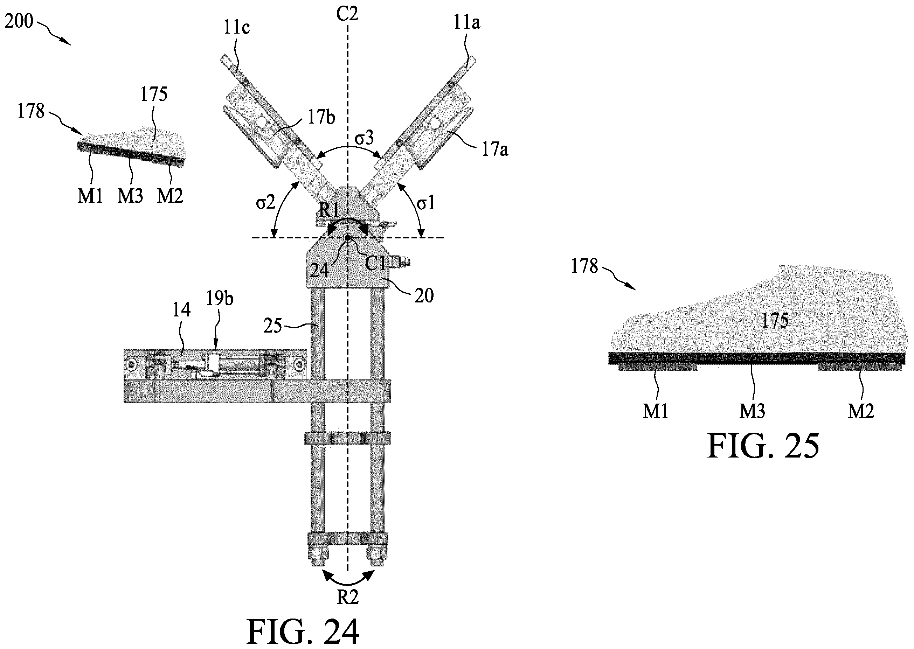

In some embodiments, referring to FIG. 24, after the third mold 11c, the fifth mold 17b and the article 178 are moved away from the second mold 14, the article 178 is removed from the fifth mold 17b. In some embodiments, the article 178 can be removed from the fifth mold 17b. In some embodiments, the article 178 having the first layer M1, the second layer M2, the third layer M3, the component 175 and the barrier layer can be removed from the fifth mold 17b. In some embodiments, the article 178 is removed from the fifth mold 17b by human or a robot arm (not shown). In some embodiments, the third mold 11c and the fifth mold 17b are tilted before removing the article 178 from the fifth mold 17b. In some embodiments, the third mold 11c and the fifth mold 17b are tilted by the position control mechanism 20, and the first mold 11a is also tilted.

In some embodiments, after the article 178 is formed and before removing the article 178 from the molding device 200, the molding device 200 is moved away from the second injection station 22, such as rotating the carrier 101. In some embodiments, the article 178 is removed from the molding devices 200 and the carrier 101.

In some embodiments, when the third mold 11c and the fifth mold 17b are tilted, the second angle σ2 is present between the bottom surface of the fifth mold 17b and the second mold 14. In some embodiments, the second angle σ2 ranges between 0 and 90 degree. In some embodiments, the second angle σ2 ranges between 20 and 70 degree. In some embodiments, the second angle σ2 is 45 degree when the article 178 is removed from the molding device 200.

In some embodiments, referring to FIG. 25, the article 178 includes the first layer M1, the second layer M2, the third layer M3 and the component 175. In some embodiments, the barrier layer is removed from the article 178. The first layer M1 has a first density, the second layer M2 has a second density, and the third layer M3 has a third density. The first density, the second density and the third density may be same or different. In some embodiments, a first interface is between the first layer M1 and the third layer M3 and having a first density gradient, and a second interface is between the second layer M2 and the third layer M3 and having a second density gradient. The first density gradient and the second density gradient may be same or different.

According to the embodiments of the present disclosure, the position control mechanism attaches to the first mold 11a, the second mold 14 and the third mold 11c. The first mold 11a and the third mold 11c are rotatable about a first axis C1 by the hinge 24 of the position control mechanism 20 and about the second axis C2 orthogonal to the first axis C1 by the pivot 26 of the position control mechanism 20, and the second mold 14 is linearly movable along the rail 25 of the position control mechanism 20. The position control mechanism 20 moves the first mold 11a opposite to the second mold 14 or moves the third mold 11c opposite to the second mold 14. When the first mold 11a is disposed opposite to the second mold 14, the third mold 11c is offset from the first mold 11a substantially in a right angle.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein, may be utilized according to the present invention. Accordingly, the appended claims are intended to include within their scope such processes, machines, manufacture, compositions of matter, means, methods and steps.

## Claims

1. A molding device, comprising:
a first mold;
a second mold;
a first mold cavity defined by the first mold and the second mold when the first mold is disposed opposite to the second mold; and
a position control mechanism attached to the first mold and the second mold,
the molding device **characterized in that**:
the first mold and the second mold are movable by the position control mechanism individually.

2. The molding device of Claim 1, wherein the first mold is rotatable about a first axis by a hinge of the position control mechanism and about a second axis orthogonal to the first axis by a pivot of the position control mechanism.

3. The molding device of Claim 1 or 2, wherein the second mold is linearly movable along a rail of the position control mechanism.

4. The molding device of Claim 1 or 2, further comprising a third mold attached to and movable by the position control mechanism.

5. The molding device of Claim 4, wherein the third mold is rotatable about a first axis by a hinge of the position control mechanism and about a second axis orthogonal to the first axis by a pivot of the position control mechanism.

6. The molding device of Claim 4 or 5, further comprising a second mold cavity defined by the second mold and the third mold when the third mold is disposed opposite to the second mold, and the first mold is offset from the third mold substantially in a right angle.

7. The molding device of any one of Claims 1 to 4, further comprising a fourth mold attached to the first mold, wherein the first mold cavity is defined by the first mold, the second mold and the fourth mold when the first mold is disposed opposite to the second mold and the fourth mold is surrounded by the second mold.

8. An injection molding system, comprising:
a carrier having a plurality of molding stations;
a molding device disposed in one of the molding stations, and including a position control mechanism, a first mold, a second mold and a third mold held by the position control mechanism; and
a first injection station disposed adjacent to the carrier and configured to inject a first material into a first mold cavity of the molding device defined by the first mold and the second mold,
the injection molding system **characterized in that**:
the position control mechanism is configured to individually move the first mold, the second mold and the third mold.

9. The injection molding system of Claim 8, wherein the first mold and the third mold are rotatable about a hinge and a pivot of the position control mechanism, and the second mold is linearly movable along a rail of the position control mechanism.

10. The injection molding system of Claim 8 or 9, wherein the hinge and the pivot are disposed over the rail, and the rail is extendable along a first axis, the hinge is configured to rotate the first mold and the third mold about a second axis, and the first axis is orthogonal to the second axis are orthogonal.

11. The injection molding system of any one of Claims 8 to 10, further comprising:
a second injection station disposed adjacent to the carrier and separated from the first injection station, and second injection station is configured to inject a second material into a second mold cavity of the molding device defined by the second mold and the third mold.

12. A molding method, comprising:
providing a molding device having a first mold, a second mold and a third mold;
engaging the first mold with the second mold to form a first mold cavity defined by the first mold and the second mold;
injecting a first material into the first mold cavity to form a first layer from the first material in the first mold cavity;
the method **characterized in that**:
disengaging the first mold from the second mold by a position control mechanism;
engaging the third mold with the second mold to form a second mold cavity defined by the second mold and the third mold;
injecting a second material into the second mold cavity and over the first layer to form an article including the first layer and a second layer from the second material; and
disengaging the third mold from the second mold by the position control mechanism.

13. The method of Claim 12, further comprising:
disposing a component on a fourth mold attached to the third mold before the second mold cavity is formed;
obtaining an article including the first layer, the second layer and the component from the molding device,
wherein the second material is injected between the component and the first layer.

14. The method of Claim 12 or 13, further comprising:
hingedly rotating the first mold toward the second mold or linearly moving the second mold toward the first mold to engage the first mold with the second mold;
pivotally rotating the first mold and the third mold to dispose the first mold or the third mold above the second mold.

15. The method of any one of Claims 12 to 14, wherein the pivotal rotation and the hinged rotation are implemented sequentially and separately.
